# EUROPEAN PATENT SPECIFICATION

(11) **EP 3 430 269 B1**
(45) Date of publication and mention of the grant of the patent: **13.11.2024**
(21) Application number: 17767056.9
(22) Date of filing: 03.02.2017
(51) Int. Cl.: F02B 37/12, F02B 37/16, F02B 39/16, F04D 27/02, F04D 29/42, F04D 29/68

(54) **A COMPRESSOR ARRANGEMENT SUPPLYING CHARGED AIR TO A COMBUSTION ENGINE**
KOMPRESSORANORDNUNG ZUM ZUFÜHREN VON GELADENER LUFT ZU EINEM VERBRENNUNGSMOTOR
AGENCEMENT DE COMPRESSEUR FOURNISSANT DE L'AIR CHARGÉ À UN MOTEUR À COMBUSTION

(30) Priority: 17.03.2016 SE 1650359
(43) Date of publication of application: 23.01.2019
(73) Proprietor: Scania CV AB, 151 87 Södertälje (SE)
(72) Inventor: HALLDORF, Erik, 547 31 Mariefred (SE); NILSSON, Per-Erik, 155 34 Nykvarn (SE); TELBORN, Klas, 647 35 Mariefred (SE)
(74) Representative: Scania CV AB
(86) International application number: PCT/SE2017/050093
(87) International publication number: WO 2017/160200

(56) References cited:
- EP-A1- 1 473 465
- DE-A1- 102010 021 929
- GB-A- 2 319 809
- JP-A- H07 174 098
- NL-C2- 2 005 104
- US-A1- 2005 002 782
- US-A1- 2007 266 705
- US-A1- 2015 159 664
- US-A1- 2015 337 863

## Description

### BACKGROUND OF THE INVENTION AND PRIOR ART

The present invention relates to a compressor arrangement supplying charge air to a combustion engine according to the preamble of claim 1.

A compressor of a turbo charger increases the power of a combustion engine by supplying charge to the combustion engine. The operation of a compressor can be defined in a compressor map plotting mass flow as a function of pressure ratio. The boundary of a stable operating region in such a map is defined by a surge limit. Operation of the compressor in a region outside the stable operating region may result in what is known as surge. Surge is defined by an irregular and probably reversed air flow through a compressor wheel. The operating point of a compressor risks to be moved into the surge region during operating conditions when the air flow rate to the combustion engine or energy to the turbine of the turbo charger is drastically reduced.

US 4,743,161, US 8,197,188 and US 8,322,138 show examples of compressors provided with an inlet portion having a structure that has become known as a MWE structure "map width enhanced". The MWE structures comprises a tubular insert or the like arranged in an air intake passage of the compressor. The tubular insert provides an additional air passage located radially outside of the air intake passage to the compressor wheel. At high air flow rates and at high speeds of the compressor wheel, the additional air passage usually supplies an additional air flow rate to the compressor as an addition to the air flow rate in the air intake passage. At low air flow rates, a part of the air flow in the air intake passage recirculates, via the additional air passage, to an upstream position of the air intake passage. The recirculation of a part of the air flow in the air intake passage of the compressor moves the surge limit to a lower flow in the map which increases the stable operating region of the compressor.

EP1473465 describes a compressor comprising an annular gas flow passage defined between the inner and outer tubular walls of a gas inlet pipe. The upstream end of the annular passage communicates with the intake or inducer portions of the inlet through at least one upstream aperture and at least one downstream aperture communicates between a downstream portion of the annular flow passage and the impeller. The inner tubular wall has a length L2 extending upstream from the downstream aperture(s).

### SUMMARY OF THE INVENTION

The object of the present invention is to provide a compressor arrangement providing a stable operation in a larger operating region than a conventional compressor arrangement.

This object is achieved by the compressor of the initially mentioned kind which is characterized by the features defined in the characterizing part of claim 1. Inevitably, recirculating of air in an air intake passage disturbs the ordinary air flow in the air intake passage. It takes some time and a certain flow distance for the disturbed air flow to again become relatively uniform. In order to provide a stable operation of a compressor, it is important to supply a relatively uniform air flow to the compressor wheel both in axial and radial direction. A conventional compressor comprises a short additional air passage for recirculation of air. Thus, the air flow is recirculated from the compressor wheel in the air intake passage to an upstream position located close to the compressor wheel. In this case, the recirculated flow will disturb the air flow in a position close to the compressor. As a consequence, the air flow to the compressor is far from uniform. According to the present invention, an additional air passage is provided allowing recirculation of air from the compressor to an air line supplying air to the compressor. In this case, it is possible to recirculate the air to an upstream position located at a relatively long distance from the compressor wheel. Thereby, the air flow has a lot of time to become more uniform before it enters the compressor wheel. Such a recirculation of a part of the air flow in the air intake passage results in a more stable operation of the compressor within a larger operating region than a corresponding region of a conventional compressor according to the above. Furthermore, the recirculating air obtains a higher temperature by the compressor wheel before it is recirculated. As a consequence, the temperature of the air flow directed to the compressor wheel will increase during recirculation of air. Since the air is recirculated to a position at a longer distance from the compressor wheel than in the conventional case, the heating of the air entering the compressor wheel will be lower than in the conventional case. An increased temperature of the air reduces the efficiency of the compressor.

According to the invention, the additional air passage is configured to return air to the air conduit in a position located at a flow distance from the compressor wheel corresponding to at least 1,5 times the inlet diameter to the compressor wheel, preferably within the range of 2-5 times the inlet diameter to the compressor wheel. In this case, the disturbed air flow in the air conduit has time to become more uniform before it enters the compressor wheel.

According to an embodiment of the invention, the additional air passage is defined by at least one return conduit having an extension between a downstream end connected to an opening in the housing and an upstream end connected to an opening in the air conduit. To attach the upstream ends of one or several return conduits to the compressor housing and the air line supplying air to the compressor is a relatively simple measure.

According to an embodiment of the invention, a part of the additional air passage is defined by an annular air gap extending around the compressor wheel in the air intake passage. Such an annular air gap makes it possible to provide a symmetrical output of a part of the air flow in the air intake passage to the additional air passage during certain operating conditions and a symmetrical input of air from the additional air passage to the air flow in the intake passage during other operating conditions. A part of the additional air passage may be defined by an annular space receiving air from the annular air gap. It is relatively easy to connect an end of a return conduit to such an annular space arranged radially outside of the air intake passage via a radial opening in the compressor housing. The air flow to the compressor is most non-uniform at the outer periphery of the intake passage. As a consequence, it is favorable to recirculate this part of the air flow.

According to an embodiment of the invention, the housing comprises a tubular portion defining a wall between the air intake passage and the annular space. The tubular portion may be made in one piece with the housing. Alternatively, the tubular member may be a separate component which is attached in the air intake passage of the housing. The tubular portion may comprise a downstream located end portion defining a side surface of the annular air gap. The housing may define the opposite side surface of the annular air gap. The tubular portion may comprise an upstream located end portion forming a closed wall section between the air intake passage and the annular space. This closed wall section prevents the additional air passage to recirculate air to an upstream position in the air intake passage of the housing.

According to an embodiment of the invention, the housing comprises a inlet portion defining at least a part of the air intake passage, wherein the inlet portion comprises a connection surface connected to an end portion of the air conduit delivering air to the compressor. Such a connection surface allows a releasable or fixed connection between an end of the air conduit and the inlet portion of the housing.

According to an embodiment of the invention, the air conduit has a curved portion closed to the air intake passage of the compressor, wherein the additional air passage is configured to recirculate air to a position of the air line located upstream of said curved portion. Many times, air conduits delivering air to a compressor has to have a curved portion closed to the compressor. The supply of recirculating air to a curved portion of the air conduit may disturb the air flow more than a corresponding supply to a straight portion of the air conduit. There is usually no difficulties to recirculate the air to a straight portion of the air line located in an upstream position of the curved portion.

According to an embodiment of the invention, the housing comprises a hollow portion configured to receive a shaft connecting the compressor wheel and a turbine wheel. In this case, the compressor is a part of a turbo charger. The compressor wheel is driven by the turbine wheel and the exhaust gases of the combustion engine. The problem with surge may arise in a compressors of a turbo charger when the air flow rate to the combustion engine is drastically reduced at the same time as the turbine is still spinning with a high speed generating power to the compressor wheel. In diesel engines, this problem will arise when the fuel supply to the engine ends. Since the exhaust manifold has a smaller volume of exhaust gases than the volume of charged air in the charged air line, parts of the accumulated charge air risks to leak through the compressor in a backward direction. However, the above mentioned recirculation of air to an upstream position located at a relatively large distance from the compressor wheel significantly reduces the problem of surge.

According to an embodiment of the invention, the additional air passage comprises flow restricting means. The flow restricting means may be a throttle valve with a constant throttle area or an adjustable throttle area. A throttle valve with a constant throttle area may be dimensioned to provide an air flow through the additional air passage such that it allows optimal operating properties of the compressor in a large operating region. A throttle valve with an adjustable throttle area may provide an adjustable air flow through the additional air passage during different operating conditions. In this case, it is possible to further provide the ability of the compressor to operate in an optimally manner in a large operating region.

According to further embodiments a turbo charger comprises such an air line and a vehicle driven by a combustion engine comprises such a turbo charger.

### BRIEF DESCRIPTION OF THE DRAWINGS

In the following a preferred embodiments of the invention is described, as an example, with reference to the attached drawings, in which:
- Fig. 1: shows a turbo charger including a compressor arrangement according to the present invention,
- Fig. 2: shows the compressor arrangement in Fig. 1 more in detail and
- Fig. 3: shows a second embodiment of the compressor arrangement.

### DETAILED DESCRIPTION OF A PREFERRED EMBODIMENT OF THE INVENTION

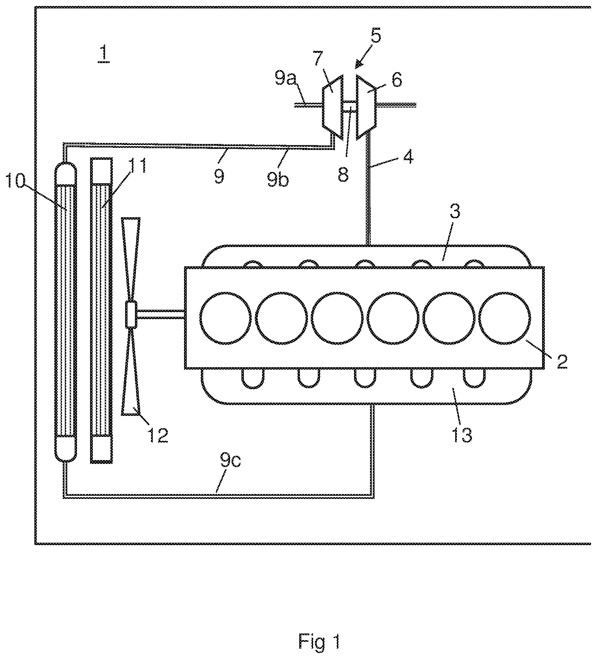

Fig. 1 shows a compressor for a combustion engine 2 powering a schematically indicated vehicle 1. The vehicle 1 may be a heavy vehicle and the combustion engine 2 may be an internal combustion engine such as a diesel engine. The exhaust gases from the cylinders of the combustion engine 2 are led via an exhaust manifold 3 to an exhaust line 4. The combustion engine 2 is provided with a turbo charger 5 comprising a turbine wheel 6 and a compressor wheel 7. The exhaust gases are initially led, via the exhaust line 4, to the turbine wheel 6. The pressure of the exhaust gases provide a driving power of the turbine wheel 6 which is transmitted, via a shaft 8, to the compressor wheel 7. As a consequence, the exhaust gases leaving the turbine wheel 6 have a reduced pressure. The compressor wheel 7 is arranged in a charge air line 9 directing charge air to the combustion engine 2. During operation of the compressor wheel 7, air is drawn from the surrounding, via a first air conduit 9a of the charge air line 9, to the compressor wheel 7. The air leaves the compressor wheel 7 with an increased pressure and an increased temperature. The charge air line 9 comprises a second air line 9b directing the charge air from the compressor 7 to at least one charge air cooler 10. In this case, the charged air cooler is exemplified as an air cooled charge air cooler 10 arranged in a front position of the vehicle together with a radiator 11. The charge air is cooled in the charge air cooler 10 by air of ambient temperature which is forced through the charged air cooler 10 and the radiator 11 by a radiator fan 12 and the ram air of the vehicle 1. The cooled charged air is directed from the charged air cooler 10, via a third air line 9c of the charge air line 9 and an inlet manifold 13, to the cylinders of the combustion engine 2.

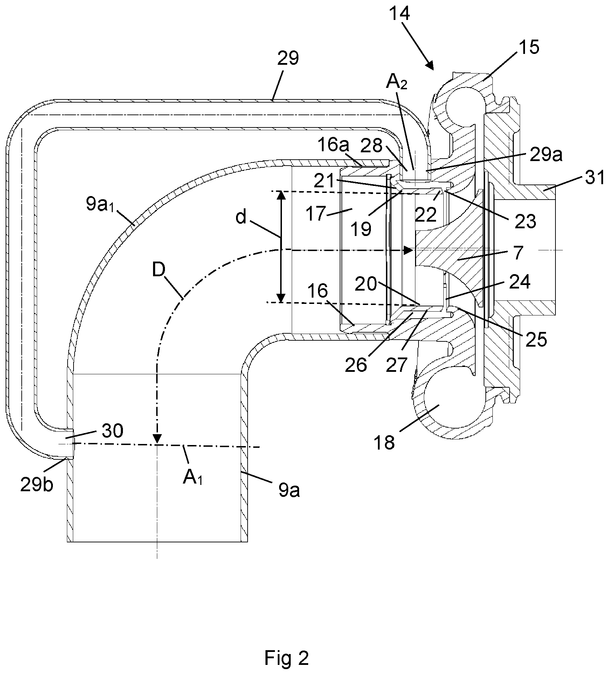

The turbo charger 5 comprises a compressor unit 14 which is shown in Fig. 2. The compressor unit 14 comprises a housing 15 enclosing the compressor wheel 7. The housing 15 comprises further an inlet portion 16 receiving air from the first air conduit 9a.

The inlet portion 16 forming a first part of an air intake passage 17 directing air to the compressor wheel 7. The inlet portion 16 comprises a connecting surface 16a configured to receive an end of the first air conduit 9a. Furthermore, the housing 15 comprises an outlet volute 18 delivering charged air to the second air line 9b. The compressor unit 14 comprises a tubular portion 19 having a radially inner surface 20 defining a second part of the air intake passage 17 directing air the compressor wheel 7. The tubular portion 19 has in an upstream position a closed wall section 21 fixedly connected to the inlet portion 16 and in a downstream position a free end portion 22 located at an axial distance from a radial surface 23 of the housing 15.

The distance between the free end portion 22 of the tubular portion 19 and the radial surface 23 of the housing 15 forms an annular axial gap 24. The annular axial gap 24 is located in a radially outer position of a part compressor wheel 7. The housing 15 has a curved inner surface 25 defining a third part of the air intake passage 17. The annular axial gap 24 is connected to an annular space 26 defined by a surface of the housing 15 and a radially outer surface 27 of the tubular portion 19. The housing 15 comprises at least one radial opening 28 to the annular space 26. The radial opening 28 is configured to receive a first end 29a of a return conduit 29. A second end 29b of the return conduit 29 is arranged in an opening 30 in the first air conduit 9a. The second end 29b of the return conduit 29 is located in an upstream position in relation to the inlet portion 16 of the housing 15 and the compressor wheel 7. In this case, the first air conduit 9a comprises a curved portion 9a₁ in the vicinity of the compressor unit 14. The second end 29b of the return conduit 29 is connected to an opening 30 in the first air conduit 9a located upstream of the curved portion 9a₁ of the first air conduit 9a. The housing 15 comprises a hollow portion 31 configured to receive the shaft 8 connecting the compressor wheel 7 and the turbine wheel 6.

During operation of the compression engine 2, the exhaust gases in the exhaust line 4 drives the turbine wheel 6. The turbine wheel 6 in turn drives, via the shaft 8, the compressor wheel 7. The compressor wheel 7 drawn air from the surrounding, via the first air conduit 9a, to the compressor unit 14. During operating conditions when the compressor wheel 7 works close to choke with a high speed and supplies a large quantity of charge air to the combustion engine 2, the static pressure in the air intake passage in a position radially inside the air gap 24 will be lower than the static pressure in the first air conduit 9a at the opening 30. In this case, an air flow is entering the opening 30, via the return conduit 29, the radial opening 28, the annular space 26 and the air gap 24, to the flow passage. Thus, during such operating conditions, the return conduit 29 provides an additional air flow to the compressor wheel 7.

During operating conditions when the compressor wheel 7 runs close to surge and provides a low air flow at a relatively high pressure through the air intake passage 17, the static pressure in a position radially inside the air gap 24 increases to a higher value than the static pressure in the first air conduit 9a at the opening 30. In this case, a part of the air flow in the air intake passage 17 is led into the air gap 24, whereupon it is directed, via the annular space 26, the radial opening 28 and the return conduit 29, to the opening 30. Consequently, a part of the air flow entering the inlet portion 16 is recirculated to the first air conduit 9a at a distance from the compressor unit 14. This recirculating part of the air flow is mixed with the ordinary air flow in the first air conduit 9a and again directed to the compressor unit 14. The opening 30 in the first air conduit 9a is arranged in a first transverse plane A₁ through first air conduit 9a. The compression of the air starts in the air intake passage 17 in a second transverse plane A₂ extending through a front surface of the compression wheel 7.

The average flow distance D of the air along a center axis in the first air line 9a from the first plane A₁ to the second plane A₂ is indicated in Fig. 2. It is important to supply a relatively uniform air flow to the compressor wheel 7 in order to provide a stable operation of the compressor. A relatively uniform supply of air to the compressor wheel 7 may provide a large stable operating region in a compressor map plotting mass flow as a function of pressure ratio. The supply of the air flow from the returning line 29 to the first air conduit 9a disturbs the relatively uniform air flow in the first plane A₁.

However, after a certain flow distance from the first plane A₁, the air flow will again become relatively uniform. The flow distance D between the first plane A₁ and the second plane A₂ is chosen such the air flow has become sufficiently uniform when it reaches the compressor wheel 7. The value of the distance D depends on a number of factors such as the dimension of the first air conduit 9a, the air flow rate in the first air conduit 9a, the air flow rate in the air intake passage 17, the air flow rate in the return conduit 29 etc. The distance D is at least 1,5 times the inlet diameter d to the compressor wheel 7 but preferably longer and within the range of 2-5 times the inlet diameter d to the compressor wheel 7.

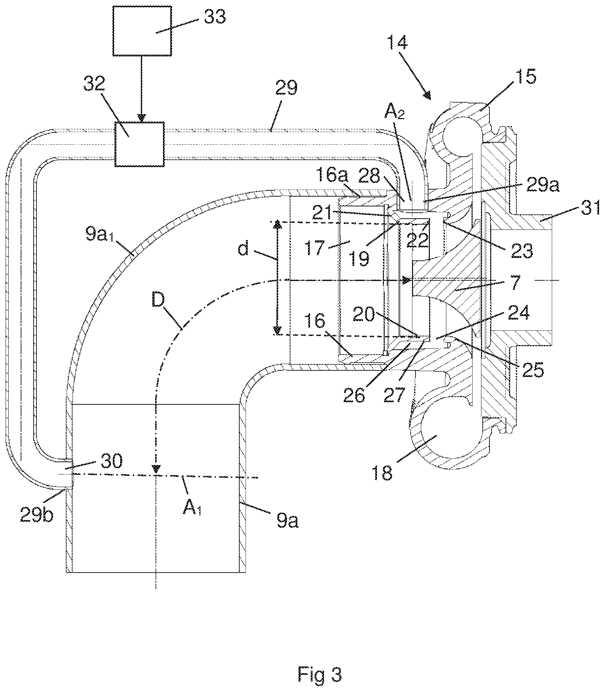

Fig 3 shows a second embodiment of the invention. In this case, the return conduit 29 has been equipped with a throttle valve 31. Furthermore, the air gap 24 has been increased. As a consequent, the air flow through the return conduit 29 is mainly restricted by the throttle valve 31. The throttle valve 31 may have an adjustable throttle area. In this case, the throttle vale 31 is controlled by a control unit 32. The control unit 32 receives information about suitable operating parameters and controls the throttle valve 31 by means of this information. In this case, it is possible to adjust the air flow through the return conduit 29 during different operating conditions in order to optimize the operating properties of the compressor wheel 7 in a large operating region. Alternatively, the throttle valve have a constant throttle area. In this case, the throttle area is dimensioned to allow an air flow through the return conduit 29 such that it allows substantially optimal operating properties of the compressor wheel 7 in a large operating region.

The invention is in no way limited to the embodiments described with reference to the drawings but may be varied freely within the scopes of the claims. It is, for example, possible to use more than one return conduit 29.

## Claims

1. An air line (9) supplying charged air to a combustion engine (2) comprising a compressor arrangement, wherein the compressor arrangement comprises:
- a compressor unit (14) comprising a housing (15) including an air intake passage (17), a compressor wheel (7) arranged in said air intake passage (17), and an additional air passage (24, 26, 28, 29, 30) allowing recirculation of air from the air intake passage (17) in a position radially outwardly of a part of the compressor wheel (7) to an air conduit (9a) delivering an air flow to the air intake passage (17) of the compressor unit (14) in a position located at an average flow distance (D) from the compressor wheel (7),
- a part of the additional air passage is defined by a return conduit (29) having an extension between a downstream end (29a) connected to an opening 28 in the housing (15) and an upstream end (29b),
the air conduit (9a) has a curved portion (9a₁) closed to the intake passage (17) of the compressor unit (14), wherein the return conduit (29) is configured to return air to an upstream position of said curved portion of the air conduit (9a), **characterized in that**
the upstream end (29b) of the return conduit (29) is connected to an opening (30) through the air conduit (9a) and
- the average flow distance (D) is defined as a distance along a center axis in the air conduit (9a), from a first plane (A1) transverse through the air conduit (9a) where the air opening (30) is arranged, to a second transverse plane (A2) extending through a front surface of the compressor wheel (7), the average flow distance (D) corresponding to at least 1,5 times the inlet diameter (d) of the compressor wheel (7).

2. An air line according to claim 1, **characterized in that** the additional air passage (24, 26, 28, 29, 30) is configured to return air to the air conduit (9a) in a position located at a flow distance (D) from the compressor wheel (7) within the range of 2-5 times the inlet diameter (d) of the compressor wheel (7).

3. An air line according to any one of the preceding claims, **characterized in that** a part of the additional air passage (24, 26, 28, 29, 30) is defined by an annular air gap extending around the compressor wheel (7) in the air intake passage (17).

4. An air line according to claim 3, **characterized in that** a part of the additional air passage is defined by an annular space (26) receiving air from the annular air gap (24).

5. An air line according to claim 4, **characterized in that** the housing (14) comprises a tubular portion (19) defining a wall between the air intake passage (17) and the annular space (26).

6. An air line according to claim 5, **characterized in that** tubular portion (19) is made in one piece with the housing (14).

7. An air line according to claim 5 or 6, **characterized in that** the tubular portion (19) comprises an upstream located end portion (21) forming a closed wall section between the air intake passage (17) and the annular space (26).

8. An air line according to claim 7, **characterized in that** the tubular portion (19) comprises a downstream located end portion (22) defining a side surface of the air gap (24).

9. An air line according to any one of the preceding claims, **characterized in that** the housing (14) comprises an inlet portion (16) defining at least a first part of the air intake passage (17), wherein the inlet portion (16) comprises a connection surface (16a) connected to an end portion of the air conduit (9a).

10. An air line according to any one of the preceding claims, **characterized in that** the housing comprises a hollow portion (31) configured to receive a shaft (8) providing a connection between the compressor wheel (7) and a turbine wheel (6).

11. An air line according to any one of the preceding claims, **characterized in that** the additional air passage (24, 26, 28, 29, 30) comprises flow restricting means (32).

12. A turbo charger comprising an air line according to any one of the preceding claims 1-11.

13. A vehicle driven by a combustion engine comprising a turbo charger according to claim 12.

## Patentansprüche

1. Luftleitung (9), die einem Verbrennungsmotor (2), der eine Kompressoranordnung umfasst, geladene Luft zuführt, wobei die Kompressoranordnung umfasst:
- eine Kompressoreinheit (14) mit einem Gehäuse (15), das einen Lufteinlasskanal (17), ein in dem Lufteinlasskanal (17) angeordnetes Kompressorrad (7) und einen zusätzlichen Luftkanal (24, 26, 28, 29, 30), der eine Rückführung von Luft aus dem Lufteinlasskanal (17) in einer Position radial nach außen von einem Teil des Kompressorrads (7) zu einer Luftleitung (9a) ermöglicht, die einen Luftstrom zu dem Lufteinlasskanal (17) der Kompressoreinheit (14) in einer Position liefert, die sich in einem durchschnittlichen Strömungsabstand (D) von dem Kompressorrad (7) befindet, enthält,
- wobei ein Teil des zusätzlichen Luftkanals durch eine Rückführleitung (29) definiert ist, die eine Verlängerung zwischen einem stromabwärtigen Ende (29a), das mit einer Öffnung 28 in dem Gehäuse (15) verbunden ist, und einem stromaufwärtigen Ende (29b) aufweist, wobei die Luftleitung (9a) einen gekrümmten Abschnitt (9a₁ ) aufweist, der mit dem Lufteinlasskanal (17) der Kompressoreinheit (14) geschlossen ist, wobei die Rückführleitung (29) so konfiguriert ist, dass sie Luft zu einer stromaufwärtigen Position des gekrümmten Abschnitts der Luftleitung (9a) zurückführt, **dadurch gekennzeichnet, dass**
das stromaufwärtige Ende (29b) der Rückführleitung (29) mit einer Öffnung (30) durch die Luftleitung (9a) verbunden ist und
- der durchschnittliche Strömungsabstand (D) definiert ist als ein Abstand entlang einer Mittelachse in der Luftleitung (9a) von einer ersten Ebene (A1) quer durch die Luftleitung (9a), in der die Luftöffnung (30) angeordnet ist, zu einer zweiten Querebene (A2), die sich durch eine Vorderfläche des Kompressorrads (7) erstreckt, wobei der durchschnittliche Strömungsabstand (D) mindestens dem 1,5-fachen des Einlassdurchmessers (d) des Kompressorrads (7) entspricht.

2. Luftleitung nach Anspruch 1, **dadurch gekennzeichnet, dass** der zusätzliche Luftkanal (24, 26, 28, 29, 30) so konfiguriert ist, dass er Luft in die Luftleitung (9a) an einer Position zurückführt, die sich in einem Strömungsabstand (D) vom Kompressorrad (7) im Bereich des 2-5-fachen des Einlassdurchmessers (d) des Kompressorrads (7) befindet.

3. Luftleitung nach einem der vorhergehenden Ansprüche, **dadurch gekennzeichnet, dass** ein Teil des zusätzlichen Luftkanals (24, 26, 28, 29, 30) durch einen ringförmigen Luftspalt definiert ist, der sich um das Kompressorrad (7) im Lufteinlasskanal (17) erstreckt.

4. Luftleitung nach Anspruch 3, **dadurch gekennzeichnet, dass** ein Teil des zusätzlichen Luftkanals durch einen ringförmigen Raum (26) definiert ist, der Luft aus dem ringförmigen Luftspalt (24) aufnimmt.

5. Luftleitung nach Anspruch 4, **dadurch gekennzeichnet, dass** das Gehäuse (14) einen rohrförmigen Abschnitt (19) umfasst, der eine Wand zwischen dem Lufteinlasskanal (17) und dem ringförmigen Raum (26) definiert.

6. Luftleitung nach Anspruch 5, **dadurch gekennzeichnet, dass** der rohrförmige Abschnitt (19) einstückig mit dem Gehäuse (14) ausgebildet ist.

7. Luftleitung nach Anspruch 5 oder 6, **dadurch gekennzeichnet, dass** der rohrförmige Abschnitt (19) einen stromaufwärts gelegenen Endabschnitt (21) umfasst, der einen geschlossenen Wandabschnitt zwischen dem Lufteinlasskanal (17) und dem ringförmigen Raum (26) bildet.

8. Luftleitung nach Anspruch 7, **dadurch gekennzeichnet, dass** der rohrförmige Abschnitt (19) einen stromabwärts gelegenen Endabschnitt (22) umfasst, der eine Seitenfläche des Luftspalts (24) definiert.

9. Luftleitung nach einem der vorhergehenden Ansprüche, **dadurch gekennzeichnet, dass** das Gehäuse (14) einen Einlassabschnitt (16) aufweist, der zumindest einen ersten Teil des Lufteinlasskanals (17) definiert, wobei der Einlassabschnitt (16) eine Verbindungsfläche (16a) aufweist, die mit einem Endabschnitt der Luftleitung (9a) verbunden ist.

10. Luftleitung nach einem der vorhergehenden Ansprüche, **dadurch gekennzeichnet, dass** das Gehäuse einen hohlen Abschnitt (31) aufweist, der zur Aufnahme einer Welle (8) ausgebildet ist, die eine Verbindung zwischen dem Kompressorrad (7) und einem Turbinenrad (6) herstellt.

11. Luftleitung nach einem der vorhergehenden Ansprüche, **dadurch gekennzeichnet, dass** der zusätzliche Luftkanal (24, 26, 28, 29, 30) eine Strömungsbegrenzungseinrichtung (32) umfasst.

12. Turbolader mit einer Luftleitung nach einem der vorhergehenden Ansprüche 1-11.

13. Fahrzeug, das von einem Verbrennungsmotor angetrieben wird, der einen Turbolader nach Anspruch 12 umfasst.

## Revendications

1. Conduite d'air (9) alimentant de l'air de suralimentation vers un moteur à combustion (2) comprenant un agencement de compresseur,
dans lequel l'agencement de compresseur comprend :
- une unité de compresseur (14) comprenant un carter (15) comportant un passage d'admission d'air (17), une roue de compresseur (7) agencée dans ledit passage d'admission d'air (17), et un passage d'air supplémentaire (24, 26, 28, 29, 30) permettant la recirculation de l'air depuis le passage d'admission d'air (17) dans une position radialement vers l'extérieur d'une partie de la roue de compresseur (7) vers un conduit d'air (9a) délivrant un écoulement d'air au passage d'admission d'air (17) de l'unité de compresseur (14) dans une position située à une distance d'écoulement moyenne (D) de la roue de compresseur (7),
- une partie du passage d'air supplémentaire est définie par un conduit de retour (29) ayant une extension entre une extrémité aval (29a) connectée à une ouverture 28 dans le carter (15) et une extrémité amont (29b), le conduit d'air (9a) a une portion incurvée (9a₁) fermée au passage d'admission (17) de l'unité de compresseur (14), dans laquelle le conduit de retour (29) est configuré pour retourner l'air vers une position amont de ladite portion incurvée du conduit d'air (9a), **caractérisée en ce que** l'extrémité amont (29b) du conduit de retour (29) est connectée à une ouverture (30) par l'intermédiaire du conduit d'air (9a) et
- la distance d'écoulement moyenne (D) est définie comme une distance le long d'un axe central dans le conduit d'air (9a), à partir d'un premier plan (A1) transversal à travers le conduit d'air (9a) où l'ouverture d'air (30) est agencée, jusqu'à un deuxième plan transversal (A2) s'étendant à travers une surface avant de la roue de compresseur (7), la distance d'écoulement moyenne (D) correspondant à au moins 1,5 fois le diamètre d'entrée (d) de la roue de compresseur (7).

2. Conduite d'air selon la revendication 1, **caractérisée en ce que** le passage d'air supplémentaire (24, 26, 28, 29, 30) est configuré pour retourner l'air vers le conduit d'air (9a) dans une position située à une distance d'écoulement (D) de la roue de compresseur (7) au sein de la plage de 2 à 5 fois le diamètre d'entrée (d) de la roue de compresseur (7).

3. Conduite d'air selon l'une quelconque des revendications précédentes, **caractérisée en ce qu'**une partie du passage d'air supplémentaire (24, 26, 28, 29, 30) est définie par un espace d'air annulaire s'étendant autour de la roue de compresseur (7) dans le passage d'admission d'air (17).

4. Conduite d'air selon la revendication 3, **caractérisée en ce qu'**une partie du passage d'air supplémentaire est définie par un espace annulaire (26) recevant l'air provenant de l'espace d'air annulaire (24).

5. Conduite d'air selon la revendication 4, **caractérisée en ce que** le carter (14) comprend une portion tubulaire (19) définissant une paroi entre le passage d'admission d'air (17) et l'espace annulaire (26).

6. Conduite d'air selon la revendication 5, **caractérisée en ce que** la portion tubulaire (19) est faite d'une seule pièce avec le logement (14).

7. Conduite d'air selon la revendication 5 ou 6, **caractérisée en ce que** la portion tubulaire (19) comprend une portion d'extrémité située en amont (21) formant une section de paroi fermée entre le passage d'admission d'air (17) et l'espace annulaire (26).

8. Conduite d'air selon la revendication 7, **caractérisée en ce que** la portion tubulaire (19) comprend une portion d'extrémité située en aval (22) définissant une surface latérale de l'espace d'air (24) .

9. Conduite d'air selon l'une quelconque des revendications précédentes, **caractérisée en ce que** le logement (14) comprend une portion d'entrée (16) définissant au moins une première partie du passage d'admission d'air (17), dans laquelle la portion d'entrée (16) comprend une surface de connexion (16a) connectée à une portion d'extrémité du conduit d'air (9a).

10. Conduite d'air selon l'une quelconque des revendications précédentes, **caractérisée en ce que** le logement comprend une portion creuse (31) configurée pour recevoir un arbre (8) fournissant une connexion entre la roue de compresseur (7) et une roue de turbine (6).

11. Conduite d'air selon l'une quelconque des revendications précédentes, **caractérisée en ce que** le passage d'air supplémentaire (24, 26, 28, 29, 30) comprend un moyen de restriction d'écoulement (32) .

12. Turbocompresseur comprenant une conduite d'air selon l'une quelconque des revendications précédentes 1 à 11.

13. Véhicule entraîné par un moteur à combustion comprenant un turbocompresseur selon la revendication 12.
